# EUROPEAN PATENT APPLICATION

(11) **EP 4 610 621 A1**
(43) Date of publication of application: **03.09.2025**
(21) Application number: 25154349.2
(22) Date of filing: 28.01.2025
(51) Int. Cl.: G01N 1/12

(54) **SAMPLE UNIT FOR A SAMPLING SYSTEM AND METHOD FOR TAKING SAMPLES FROM MOLTEN ALUMINUM IN A PRIMARY ALUMINUM PRODUCING FACILITY**

(30) Priority: 01.03.2024 EP 24160821; 01.03.2024 EP 24160822
(71) Applicant: Heraeus Electro-Nite International N.V., 3530 Houthalen (BE)
(72) Inventor: Kendall, Martin, 3530 Houthalen (BE); Zels, Adriaan, 3530 Houthalen (BE); Cappa, Chris, 3530 Houthalen (BE); Mingneau, Frank, 3530 Houthalen (BE)
(74) Representative: Heraeus IP

(57) **Abstract**

The present invention relates to sample units for a sampling system for taking samples from a molten aluminum bath in a primary aluminum producing facility. The sample units comprise a refractory body, a sample chamber assembly arranged within the refractory body, an inflow opening, which is in flow connection with the sample cavity and is positioned in connection to the lateral side of the sample cavity and an inflow conduit arranged at least partly in the inflow opening. The invention further relates to a sampling system and a method for taking samples of molten aluminum with the inventive sample unit.

## Description

The present invention relates to sample units for a sampling system for taking samples from a molten aluminum bath in a primary aluminum producing facility. The invention further relates to a sampling system comprising an inventive sample unit and a method for taking samples of molten aluminum.

During the processing of metals in their molten state, it is necessary to obtain a representative sample of the molten metal at various stages of the process, for example, for the analysis or evaluation of either the chemical composition or the metallographic structure of the sample. Different methods for analyzing molten metals during manufacturing and further processing are known in the art.

Historically, the composition of a solidified metal sample is often determined using arc spark-optical emission spectroscopy (spark-OES). Spark-OES systems are effective systems for determining the chemical composition of a metal sample and for controlling the processing of molten metals due to their rapid analysis times and inherent accuracy. Recently, also LIBS spectroscopy has been applied to obtain the data of interest.

Irrespective of the type of analysis, the accuracy and reliability of the obtainable results has been known to be dependent on the quality of the sample. It is desired that the taken sample can be analyzed without any further preparation steps and as close to the place of sampling as possible.

Primary aluminum (Al) production is to be distinguished from secondary aluminum production: primary aluminum is produced from Al raw material, typically bauxite, which is chemically treated to obtain alumina, whereas secondary Al is produced from recycled Al scrap or from primary aluminum, which is further treated, alloyed and/or re-molten. For secondary aluminum production, the scrap is molten in a suitable furnace and processed and treated further as needed.

Primary aluminum is typically produced by the Hall-Héroult process. This electrolytical process is based on the electrochemical decomposition of alumina dissolved in a sodium-cryolite electrolyte (Na₃AlF₆) at 940 - 980 °C. The process is multivariant and requires careful control of the electrolyte chemistry, the electrical power input and the electrodes to achieve high efficiency and the correct chemical composition of the aluminium metal being produced. In metallurgical facilities producing aluminum, pots containing the refined material in different stages are tapped daily or every second day. The batches of different pots will be mixed in the cast house to produce the targeted grades. Some elements are known to be critical for the quality of the final product and thus their levels need to be determined before the blending starts.

The pots of a primary aluminum producing facility are arranged side to side, whereby each pot contains around 10 t of liquid aluminum underneath a layer of liquid and solidified salts (the cryolite layer). The liquid metal bath depth and height will vary with the quantity of aluminum and the age of the pot. Due to the geometry of these pots, the sampling cannot be done with visual contact to the metal interface.

To obtain an aluminum sample from a pot the state-of-the-art sampling procedure comprises the utilization of a preheated coated spoon as a sampling device. The spoon is inserted through the cryolite in the aluminum pool and after retracting the filled spoon and a decanting of also obtained cryolite, the remaining aluminum is poured in a copper mold. This sampling procedure exposes sodium (Na) contained in the sample in contact with air, and some of the sodium is volatilized, and thus lost from the sample. After a cooling period, the sample is obtained and sent to a remote lab, where it is prepared to be suitable for a final analysis. These steps are time consuming, and it is desired to shorten the time between sampling and the final analysis. Furthermore, the manual handling of the molten aluminum with a spoon is a dangerous operation which shall be avoided.

Sampling systems comprising a lance which carries a suitable sample unit are commonly applied in iron and steel foundry applications. Such devices are for example disclosed in EP 0893681 A1. These devices are used to immerse the sample unit under the surface of the molten metal to be sampled, where a sample chamber positioned in the sample unit is filled. Between lance and sample body, a cardboard tube can be arranged to extend the length of the whole device. The sample units typically comprise two parts: a refractory body and a sample chamber assembly which is arranged within the refractory body. The sample chamber assembly comprises molds which delineate the hollow sample chamber, typically these molds are either a two-part clam shell type arrangement or a ring covered on its upper and lower sides by flat plates. The sample unit further has a suitable opening through which the molten metal can enter the sample chamber. After sampling, the whole device is retracted from the molten metal and the refractory body is removed from the sample chamber assembly after solidification of the obtained sample. The remaining parts of the refractory body and sample chamber assembly are waste and need to be disposed. A conventional material for the re-usable lance and the sample chamber assembly is steel, while the refractory body typically comprises a sand material, like resin coated silica-based sand. While these material selections are suitable for steel producing facilities, they cannot be applied in aluminum foundries, since the iron (Fe) and silicon (Si) contained in the steel, or the sand are not desired in the final aluminum product. For this reason, they can also not be disposed in the molten aluminum bath.

The utilization of this technique in aluminum sampling applications is not trivial and has for further reasons not been disclosed in the prior art: The circumstances of sampling are not comparable - in steel facilities a direct view on the sampling place is possible, while in primary aluminum pots such a direct control is hindered. Furthermore, the cryolite layer covering the primary aluminum bath poses additional demands on the sampling system - the sampling device needs to be capable to travel through the cryolite layer without a penetration of the salts into the sample chamber. Furthermore, the materials applied in the state-of-the-art systems are not compatible with the demands of an Al producing facility.

Additionally, the temperature conditions in an aluminium bath are different: Aluminium has a melting point of 660 °C, while the temperature of the bath is typically in the range of 940 - 980 °C, the access of around 300 °C is referred to as superheat. In steel producing facilities, the superheat is typically in the range of 30 - 170 °C, depending on the type of facility and point in the process. When a sample of the respective molten metal is taken, the liquid sample needs to cool and solidify as fast and homogeneous as possible to be suitable for a subsequent direct analysis. A higher superheat by orders of magnitude poses completely different requirements on a suitable sampler in terms of cooling behavior and geometry design.

For the above explained reasons, it is desired to provide a sample unit for a sampling system which can be applied to obtain samples from aluminum, especially in primary aluminum producing facilities.

An objective of the present invention was to provide such a sample unit.

It was a further objective to provide a sample unit, which provides samples which can be directly analyzed without further processing. To be suitable for direct analysis, a sample, especially the sample surface, needs to be homogeneous, free of segregation and contaminations. This property is in particular influenced by the cooling process after the liquid sample has been taken. Furthermore, the sample cavity shall be filled completely during the sampling process, which also enhances the homogeneity and the suitability for a direct analysis.

In an additional aspect, the sample unit should be compatible with the demands and environment of an aluminum producing facility, in particular it should be suitable to take samples from a molten material with high superheat.

In a further aspect, the sample unit shall provide samples which deliver analysis with a higher accuracy, especially with regard to the sodium content.

In a different aspect, it was an objective of the invention to provide a sampling system to obtain samples from primary aluminum.

A further objective was to provide a method for taking samples from molten aluminum with a sampling system comprising a lance and a sample unit.

These objectives are attained by the subject-matter defined in the independent claims.

The invention provides a sample unit for a sampling system for taking samples from a molten aluminum bath in a primary aluminum producing facility. The sample unit is configured to receive a sample of molten aluminum and comprises:
- a refractory body;
- a sample chamber assembly arranged within the refractory body,
   ∘ wherein the sample chamber assembly comprises at least two chamber parts which are configured to enclose a sample cavity,
   ∘ wherein the sample cavity comprises a top side, a bottom side and a lateral side, wherein the lateral side extends between the top side and the bottom side and
   ∘ wherein the mass of an aluminium sample with the volume of the sample cavity is less than 20 % of the mass of the sample chamber assembly;
- an inflow opening, which is in flow connection with the sample cavity and is positioned in connection to the lateral side of the sample cavity;
- an inflow conduit arranged at least partly in the inflow opening,

∘ wherein the inflow conduit comprises an inlet end and an outlet end,
∘ wherein the outlet end is the end arranged next to the sample cavity and
∘ wherein the inflow conduit is made from a metal.

Preferred embodiments are defined in the dependent claims. The preferred embodiments may be realized individually or in any possible combination.

The present invention provides a sampling unit that delivers an aluminium sample which can be analyzed by spectroscopic methods without further processing. Surprisingly, it has been found that the utilization of an inflow conduit made from metal in combination with a balanced ratio of the volume of the taken sample to the mass of the sample chamber assembly allows to provide a sample unit which can be utilized to obtain samples from molten aluminum with a high superheat, especially from molten aluminum in a primary aluminum producing facility. In particular, the sample cavity is completely and homogeneously filled during sampling and the sample cools rapidly in the sampler, thus preventing the leakage of the sampled aluminium. It has further been observed that the optimized geometry and the fast cooling prevents segregation within the sample, especially in the area of the to be analyzed sample surfaces. The avoidance of segregation is crucial for an accurate analysis of elements such as Fe and Si. Furthermore, the sampling accuracy, in particular in relation to the sodium content, is increased since the sample can be directly obtained without further handling.

The invention relates to a sample unit for taking samples from a molten aluminum bath.

As used herein, the term "molten aluminum bath" is used to describe a melt of aluminum in a vessel. An alternative term for "molten aluminum bath" known to a skilled person is "aluminum melt". The term molten aluminum bath does not exclude the presence of any solid or gaseous parts, including for example non-molten parts of the respective metal or solid raw materials. In primary aluminum producing facilities, the molten aluminum bath may be covered with a cryolite layer. Additionally, the aluminum bath may be covered with a crust of solid material which is positioned above the cryolite layer, in other words, the cryolite layer may be positioned between such a crust and the aluminum melt. It is to be understood, that the crust also comprises cryolite.

The sampling unit is especially advantageous for taking samples in primary aluminum producing facilities. Primary aluminum is to be understood as aluminum produced by electrolytic processing of aluminum containing raw materials like alumina.

The temperature of aluminum melts differs and usually depends on the composition of the aluminum and the stage of the production process. According to a preferred embodiment, the temperature of the molten aluminum bath is in the range of 850 - 1100 °C and more preferably in the range of 900 - 1000 °C. In view of the melting temperature of aluminium of 660 °C, the superheat of the molten aluminium bath is in the range of 190 - 440 °C and more preferably in the range of 240 - 340 °C. The inventive sample unit is in surprisingly suitable to obtain samples from a molten metal under such circumstances, even over a wide range of superheats. The range in superheat demands a sampling unit that gets filled at the low end of the superheat range, and stays filled at the high end of that range. Thus, the inflow conduit must stay open long enough to allow for a complete filling, but still supports the freezing of the sampled molten metal before the sampling procedure ends to prevent a leakage of the sample. Additionally, a segregation within the sampled material shall be suppressed in order to analyze the sample directly after sampling and cooling, which could not be realized with samplers commonly used in steel applications.

The sample unit is configured to receive a sample of molten aluminum when the sample unit is immersed in a molten aluminum bath. The sample is received in a sample cavity. It is to be understood, that the sample unit is a disposable item.

The sample unit comprises a refractory body.

The refractory body may have a cylindrical or barrel shape. It is to be understood, that the refractory body builds the outer part of the sample unit. A suitable refractory body can have a height between 20 and 80 mm, preferably between 30 und 70 mm. Preferably, the diameter of the refractory body is in the range between 20 and 80 mm, preferably between 30 und 70 mm.

The refractory body may be a monolithic body; it may also comprise a plurality of parts. For example, the refractory body may comprise an essentially tube-shaped part and a closing part closing one of the openings of the tube. A two-part refractory body may also comprise an upper part and a lower part, wherein both parts are essentially cup-shaped and configured to engage each other. Preferably, the upper part comprises an indentation configured to be engaged by an immersion end of a lance. The whole refractory body can be a molded sand body or the plurality of parts building it can be molded sand bodies.

The refractory body is made from any material which is suitable to withstand the sampling environment, preferably the material is also compatible with the demands of an aluminum producing facility, in particular with the demands of a primary aluminum producing facility. The material of the refractory body will also be referred to as "refractory material" in the following.

Preferably, the refractory material is a sand material, for example a resin coated sand material like a resin coated silica. The refractory material may comprise a binder material, for example a phenolic resin. Preferably, the refractory material comprises 1 - 9 mass-% of a binder material, more preferred 3-7 mass-%. The mass-% of binder material is to be understood of the mass percentage of binder material in the total weight of the refractory material.

Preferably, the refractory body has a certain porosity to permit the gases developed during the sampling operation to escape in a simple way through the porous structure. Preferably, the refractory body has a porosity of least 20 %, more preferred of at least 30 %. For example, the refractory body may have a porosity in the range of 20 - 50 %, preferably in the range of 30 - 40 %. The porosity refers to the measure of the void spaces within the refractory body. It is to be understood as the volume of open spaces within the refractory body divided by the total volume of the refractory body.

Exemplary sample units can have a height between 20 and 80 mm, preferably between 30 und 70 mm. Preferably, the diameter of the sample unit is in the range between 20 and 80 mm, preferably between 30 und 70 mm.

In advantageous embodiments, the mass of the sample unit is lower than 150 g, preferably lower than 120 g, most preferred lower than 100 g. In steel applications, the weight of commonly used sample units is around 300 g, the sample unit according to the invention has thus a much smaller weight, which additionally enhances its usability for aluminum sampling applications.

The sample unit comprises a top side and a bottom side. Preferably, the top side of the sample unit is configured to be engaged by an immersion end of a lance, preferably in such a way that the immersion end of the lance can be inserted into the sample unit. Preferably, the top side of the sample unit is configured to completely surround an immersion tip of the lance. In preferred embodiments, the top side comprises an indentation configured to interact with the immersion end of the lance. Preferably, the indentation is cylindrical or frusto-conical shaped.

The sample unit comprises a sample chamber assembly arranged within the refractory body. The sample chamber assembly encloses the hollow volume of the sample unit which forms the sample cavity. The sample chamber assembly comprises at least two chamber parts which are configured to enclose the sample cavity. Phrased differently, the sample cavity is to be understood as a hollow part inside the sample unit which is configured to receive the molten aluminum.

The sample cavity comprises a top side, a bottom side and a lateral side, wherein the lateral side extends between the top side and the bottom side. The top side and the bottom side are the sides of the sample cavity which extend perpendicular to the longitudinal axis of the sample unit.

The sample chamber assembly may for example comprise two chamber parts in form of half shells or a cup-shaped part and a flat cover. In an alternative embodiment the sample chamber assembly may comprise two flat plates and a ring, wherein the two flat plates are arranged on the opposite sides of the ring and close the tube-shaped hollow volume of the ring. Preferably, the sample chamber assembly comprises two flat plates and a ring. In such cases, the lateral side of the sample chamber assembly is confined by an inner wall of the ring, and the top side and the bottom side are confined by a side of one of the respective plates. Such a configuration is in particular advantageous, since the obtained sample is symmetrical and comprises two sides that can be analyzed in a subsequent analysis.

The chamber parts of the sample chamber assembly are preferably formed of materials which are good thermal and electrical conductors, preferably a metal. The metal may for example be aluminum, copper or another metal having similar thermal and electrical conductivity properties. Preferably, the parts of the sample chamber assembly are made of aluminum and/or copper, even more preferred all chamber parts are made from aluminium. By employing aluminum, no additional contaminating elements are introduced into the molten aluminum during sampling and additionally, the remains of the sample chamber assembly after the sampling procedure can be directly disposed in the aluminum bath.

Preferably, the at least two chamber parts are detachable from each other.

In preferred embodiments, at least one of the chamber parts is configured to be inseparable from a sample. The sample is to be understood as a solidified sample of molten aluminium after the sampling procedure contained within the sample cavity. Such a configuration is especially advantageous, since the chamber parts can be utilized for positioning and manipulating the sample in a subsequent analysis. Furthermore, the chamber part may act as a cooling body during the analysis, preventing the overheating of the sample and thus leading to more accurate results.

According to the invention, the mass of an aluminium sample with the volume of the sample cavity is less than 20 % of the mass of the sample chamber assembly. The mass of the sample chamber assembly herein refers to the combined mass of the chamber parts. A sample with a relative low mass in relation to the sample chamber assembly ensures, that the sample is cooled fast enough to obtain a sample of the required quality in terms of homogeneity and filling, even for molten materials with a high superheat like the to be sampled aluminium. Furthermore, the cavity can be filled fast enough to ensure a complete filling without remaining hollow parts, which would hinder a reliable subsequent analysis. It is to be understood, that by "the mass of the sample" it is only referred to the parts of sampled aluminium within the sample chamber, in particular, sampled metal within the inflow conduit is not considered as part to the sample mass.

In preferred embodiments, the mass of an aluminium sample with the volume of the sample cavity is less than 15 % of the mass of the sample chamber assembly, even more preferred less than 10 %. For example, the mass of an aluminium sample with the volume of the sample cavity is in the range of 2 to 20 % of the mass of the sample chamber assembly, more preferred in the range of 3 to 15 %, even more preferred in the range of 4 to 10 %.

Preferably, the mass of the sample chamber assembly in the range of 10 - 30 g, more preferred in the range of 12 - 25 g.

The mass of the sample chamber assembly preferably accounts for not more than 40 % of the mass of the sample unit, preferably for not more than 30 %. For example, the mass of the sample chamber assembly may account to 10 to 40 % of the overall mass of the sample unit, more preferred to 20 to 30 %.

Preferably, the mass of an aluminium sample with the volume of the sample cavity in the range of 0,3 - 5 g, more preferred in the range of 0,5 - 4 g, even more preferred in the range of 0,6 - 3,5 g. The mass of an aluminium sample with the volume of the sample cavity is to be understood as a solid body with the volume of the sample cavity with a density of 2,7 g/cm³ at 20 °C. Preferably, the volume of the sample cavity assembly in the range of 100- 1900 mm³, more preferred in the range of 150 - 1500 mm³, even more preferred in the range of 200 - 800 mm³, most preferred in the range of 200 - 500 mm³.

Preferably, the volume of the sample cavity is less than 30 % of the volume of the chamber parts enclosing the sample cavity. The volume of the sample cavity herein refers to the hollow chamber enclosed by the sample chamber parts. A sample cavity with a relative low volume in relation to the volume of the chamber parts ensures, that the sample is cooled fast enough to obtain a sample of the required quality in terms of homogeneity and filling. In preferred embodiments, the volume of the sample cavity is less than 25 % of the volume of the sample chamber assembly, even more preferred less than 20 %.

Preferably, the volume of the chamber parts is in the range of 3000 - 9000 mm³, more preferred in the range of 3500 - 8500 mm³, even more preferred in the range 4000 - 8000 mm³ g.

Preferably, the sample cavity is completely enclosed by the chamber parts, in other words, the sample cavity is not in contact with the refractory body.

Preferably, the sample chamber assembly is completely arranged within the refractory body. Thus, the refractory body comprises the top side and the bottom side of the sample unit. The top side is preferably configured to receive a lance. Preferably, the bottom side of the sample unit is closed. In other words, the side which first immersed into the molten aluminum during the sampling procedure does not comprise an opening.

The geometry of the sample cavity Is not further restricted. Preferably, the sample cavity has a circular cross-section perpendicular to the longitudinal axis of the sample unit. The longitudinal axis is to be understood as the axis connecting the top side and the bottom side of the sample unit. Also preferred is a sample cavity which comprises two flat faces opposite one another along the longitudinal axis, in other words the top side and the bottom side of the sample cavity are preferably arranged parallel to each other.

In an advantageous embodiment of the invention, the sample cavity is constructed cylindrically, and the top side and the bottom side of the sample cavity have an approximately circular cross section. In other words, the sample cavity is preferably disc shaped. Cylindrical and/or disc shaped samples are in particular advantageous because they can be easily directly analyzed without further sample preparation and comprise two analysis surfaces. Additionally, such a cylindrical or disc shape is advantageous because it allows a high symmetry of the sample cavity and a homogenous inflow of the sampled molten aluminium.

However, it has been found that for aluminium samples the sample needs to have a certain thickness to be suitable for repeated analysis. The thickness of the sample is directly related to the height of the sample cavity. The height of the sample cavity is to be understood as the length of the lateral side; the diameter is the largest diameter of the top side. Sample dimensions as commonly used in analysis for steel samples, with a focus of a sample as thin as possible in the range of or below 2 mm, have been found to be unsuitable. Without being bound to theory, it has been assumed that a certain thickness is required in order to have a sufficient thermal mass of the sample during spectroscopic analysis typically applied. Preferably, the sample cavity has a height of at least 3 mm, more preferred of at least 4 mm. For example, the sample cavity may have a height in the range of 3 to 8 mm, more preferably in the range of 4 to 7 mm.

In preferred embodiments, the parts of the sample chamber assembly can be pressed against one another, and thus held together, by closing means, for example by a spring, a clip or a clamp. Alternatively, or additionally, fixation means can be foreseen, for example an adhesive attaching the parts of the sample chamber assembly to each other. In advantageous embodiments, the sample chamber assembly is arranged in the refractory body in such a way, that no further closing means are needed. In other words, the sample chamber assembly is preferably clamped in the refractory body. By using such a configuration for holding the sample chamber assembly together, the parts are held together by compressional forces applied by the refractory body and no glues or cements are needed to be used for said closing. Thus, a simplified sample unit is obtained which further reduces the amount of potentially contaminating material being brought into contact with the molten aluminum to be sampled.

The sample unit comprises an inflow opening, which is in flow connection with the sample cavity. The inflow opening is to be understood as a hollow space that is adapted to enable the inflow of the molten aluminium to be sampled. Accordingly, the inflow opening extends through the refractory body. In other words, the refractory body comprises a void through which the molten aluminium can flow into the sample cavity during sampling.

The inflow opening is positioned in connection to the lateral side of the sample cavity. In other words, the inflow opening is positioned in a face of the sample cavity which is not aligned on the longitudinal axis of the sample unit. A sideways positioning of the inflow opening allows to submerge the sample unit in the molten aluminium without the cryolite layer entering the sample cavity during the passage. Additionally, it renders the sampling unit and the sampling procedure more robust against a potential touching of the vessel bottom.

Preferably, the inflow opening is positioned centrally in the lateral side of the sample cavity. Thus, the inflowing metal distributes homogeneously in the sample cavity and a symmetrical sample can be obtained.

Accordingly, the sample chamber assembly comprises an opening which is in flow connection with the inflow opening. Thus, there is a flow connection between the inflow opening of the sample unit and the sample cavity.

Preferably, the assembled sample chamber assembly comprises only one opening. The opening is to be understood as a void space in the sample chamber assembly.

Preferably, the parts of the sample chamber assembly are not arranged in a gas-tight manner, in other words the sample chamber assembly is gas permeable. Thus, gases present in the sample cavity can leave the sampling chamber while the molten metal flows in, so that gas inclusions in the sample are prevented. Put differently, the sample chamber assembly provides for a ventilation of the sample cavity during the sampling procedure. Methods to adjust the gas permeability of the sample chamber assembly are known to the skilled person. The gas permeability can for example be influenced by the surface texture of the chamber parts, in particular by the roughness, or by ventilation means like channels foreseen in the chamber parts.

In preferred embodiments, the gas permeability of the sample unit is higher than 3 l/min, more preferred higher than 5 l/min. The gas permeability is to be understood as the gas-flow that is established when the inflow conduit of the sample unit is connected to compressed air with a pressure of 1 bar. The lower the volume flow, the lower is the gas permeability. Surprisingly it has been shown that the sample unit may not be too gas-tight to allow for a suitable filling of the sample chamber assembly. Sample units with gas permeabilities as commonly applied in steel applications could not be used for aluminium sampling. In preferred embodiments, the gas permeability of the sample unit is less than 15 l/min, more preferred less than 10 l/min. Preferably, the gas permeability is in the range of 3 to 15 l/min, more preferred in the range of 4 to 10 l/min. The filling of the sample chamber assembly is optimized when the gas permeability is below 15 l/min.

The inflow opening may be protected with suitable means to ensure that cryolite cannot enter the sample unit before the sample unit reaches the sampling position, for example the inflow opening may be covered with a material that dissolves or burns once it is exposed to the environment of the molten aluminum. Suitable means can for example be a tape or a plug, for example a paper tape.

The sample unit comprises an inflow conduit which is at least partly arranged in the inflow opening. In other words, the inflow conduit is configured to be received by the inflow opening. It is to be understood that such an inflow conduit establishes a flow connection through the inflow opening into the sample cavity. An inflow conduit thus enables the flow of molten metal from a molten aluminum bath into the sample cavity.

According to the invention, the inflow conduit is made from a metal. According to state-of-the-art applications, the inflow conduit is commonly made of a quartz material. Metal was considered as not suitable due to the high thermal conductivity, which would lead to a premature freezing on the inflowing material in the inflow conduit before the sample cavity would be filled. Furthermore, metal was thought to dissolve in the inflowing metal which would lead to a falsification of the obtainable analysis. Surprisingly it has been found, that against these assumptions an inflow conduit made from a metal even enhances the sampling process and the quality of the obtained sample, when the cavity dimensions are adapted accordingly. In particular, a metal inlet allows to obtain a sample which is completely filled while having a surface which is suitable for direct analysis. Without being bound to theory, it is though that a metal inflow conduit of appropriate dimensions allows the liquid metal to enter the sample cavity and fill it completely, but a subsequent leaking of the samples metal is prevented, since the liquid metal in the metal inflow freezes very fast.

Preferably, the inflow conduit is made from steel or stainless steel.

Additionally, metal is a more robust material in comparison to quartz glass, which allows to reduce the dimensions of the inflow conduit, further improving the inflow behavior of the sampled liquid metal. For example, the inflow conduit can have a wall thickness in the range of 0,1 - 0,7 mm, more preferred in the range of 0,2 - 0,6 mm. Furthermore, metal allows inflow conduits with smaller outer diameters compared to the commonly used quart tubes, for example the outer diameter of the inflow conduit can be in the range of 2 - 9 mm, more preferred in the range of 3 - 7 mm, even more preferred in the range of 3,5 - 5,5 mm.

The geometry of the inflow conduit may be defined by the wall thickness (W), an outer diameter (ODc), an inner diameter (IDc), a total cross-sectional area defined by the outer diameter (OCc) and an inner cross-sectional area (IC_{C}) defined by the inner diameter. The diameters and cross-sectional areas refer to the diameters and cross-sectional areas perpendicular to the longitudinal axis of the inflow conduit. The inner diameter is the diameter inside the walls of the inflow conduit, i.e. the outer diameter reduced by twice the wall thickness (ID_{C}= ODc - 2*W).

For example, the inner diameter of the inflow conduit can be in the range of 1 - 5 mm, more preferred in the range of 2 - 4,5 mm, even more preferred in the range of 2,5 - 4 mm.

The inflow conduit comprises an inlet end and an outlet end. The outlet end is the end arranged next to the sample cavity. Accordingly, the inlet end is the end through which the sampled molten metal enters the inflow conduit. The outlet end may extend into the sample cavity or may be positioned at the sample cavity. In other words, the inflow conduit extends at least partly through the refractory body of the sample unit. The inlet end may protrude from the refractory body, may be positioned flush with the outer wall of the refractory body, or may be positioned within the refractory body. Preferably, the inlet end protrudes from the outer wall of the refractory body.

Preferably, the mass of an Al sample with the volume enclosed by the inflow conduit is less than 70 % of the mass of the inflow conduit, even more preferred less than 60 %, most preferred less than 50 %. The mass of an Al sample with the volume with the volume enclosed by the inflow conduit is to be understood as a solid body with the volume surrounded by the wall of the inflow conduit with a density of 2,7 g/cm³ at 20 °C. It has been shown that such a ratio ensures a homogeneous filling of the sample cavity while a fast enough cooling of the sampled metal to prevent leakage of the liquid metal is still ensured. For example, the volume enclosed by the inflow conduit can be in the range of 20 to 70 % of the mass of the inflow conduit, preferably in the range of 30 to 60 %, even more preferred in the range of 35 to 55 %.

It has been found that the ratio between the volume of the sample cavity and the inner cross-sectional area of the inflow conduit (IC_{C}) influences the quality of the obtainable aluminium sample. Preferably, the ratio between the volume of the sample cavity (given in mm³) and the inner cross-sectional area of the inflow conduit (given in mm²) is in the range of 25 - 60 mm, more preferred in the range of 30 - 55 mm. When the ratio is higher, the sample cavity will not fill; when the ratio is smaller, the liquid aluminium will leak out of the sample cavity after the immersion. In typical direct analysis samplers applied for steel applications, this ratio is at least 60 mm; for classical samplers, the ratio is in the range of 600 mm (for example Samp-O-Line^{®} samplers for steel sampling available from Heraeus Electro-Nite International N.V.).

In a second aspect, the invention provides a sample unit for a sampling system for taking samples from a molten aluminum bath in a primary aluminum producing facility. The sample unit is configured to receive a sample of molten aluminum and comprises:
- a refractory body;
- a sample chamber assembly arranged within the refractory body,
   ∘ wherein the sample chamber assembly comprises at least two chamber parts which are configured to enclose a sample cavity,
   ∘ wherein the sample cavity comprises a top side, a bottom side and a lateral side, wherein the lateral side extends between the top side and the bottom side and
   ∘ wherein the mass of an Al sample with the volume of the sample cavity is less than 20 % of the mass of the sample chamber assembly;
- an inflow opening, which is in flow connection with the sample cavity and is positioned in connection to the lateral side of the sample cavity;
- an inflow conduit arranged at least partly in the inflow opening,
   ∘ wherein the inflow conduit comprises an inlet end and an outlet end,
   ∘ wherein the outlet end is the end arranged next to the sample cavity and
   ∘ wherein the ratio of the volume of the sample cavity and the inner cross-sectional area of the inflow conduit are in the range of 25 to 60 mm.

All features, advantages and embodiments mentioned in relation to the first sample unit according to the invention also apply to the second sampling unit of the invention.

The second aspect of the present invention provides a sampling unit that delivers a sample which can be analyzed by spectroscopic methods without further processing. Surprisingly, it has been found that an optimized ratio between the sampled mass, the sample dimensions and the dimensions of the inflow conduit allows to provide a sample unit which can be utilized to obtain samples from molten aluminum, especially from molten aluminum in a primary aluminum producing facility, with a high superheat. In particular, the sample cavity is completely and homogeneously filled during sampling and the sample cools rapidly in the sampler.

In a further aspect, the invention provides a sampling system for taking samples from a molten aluminum bath in a primary aluminum producing facility, comprising a sample unit according to the invention and a lance. The lance has an immersion end and a handling end and is configured to engage the sample unit.

All features, advantages and embodiments mentioned in relation to the sample units according to the invention also apply to the sampling system of the invention.

Surprisingly, it has been found that a sampling system comprising an inventive sample unit and a lance can also be applied for aluminum sampling applications in primary aluminum producing facilities. The sampling system provides a combination of a sampling unit, that delivers a sample that can be directly analyzed, in combination with an immersion lance avoiding all risks of bath contamination. The immersion lance is preferably reusable and maintenance free.

An additional benefit of this sampling system is the combability with the environment present in an aluminum producing facility.

The sampling system comprises a lance, which has an immersion end and a handling end.

The immersion end is to be understood as the end portion of the lance on one side. The immersion end is configured to be immersible in the molten aluminum. The immersion end ends in an immersion tip, in other words, the end portion of the immersion end is the immersion tip. The handling end is the opposite end of the lance, in other words, the lance extends from the immersion end to the handling end.

The lance can be formed as a straight pole, it may also be bent. Preferably, the lance is bent. Such a construction allows the lance to have at least two portions: an immersion portion extending from the immersion end to the bent and a handling porting extending from the bent to the handling end. Preferably, the bent angle is in the range between 120 - 160 ° in such cases.

The lance can be formed as a monolithic device, it can also comprise a number of parts which are fixated to each other in a suitable way, for example by threading means, welding, press-fitting or combinations thereof. The lance may comprise additional parts, like means for handling, which are preferably foreseen at the handling end of the lance.

The material of the lance is selected to be compatible with the environment of the aluminum producing facility. For example, the lance and especially the immersion part needs to be resistant to high temperatures, in particular resistant against the temperature of the molten aluminum. The melting temperature of aluminum is 660 °C, however, the temperature of the molten aluminum bath in an aluminum producing facility is typically even higher. Such a temperature resistance may be particularly relevant to portions of the lance which are immersible. Thus, the material of the immersion end of the lance has a melting point higher than 950 °C.

Suitable materials for the immersion end of the lance are for example stainless steel and copper. In preferred embodiments, the immersion end of the lance is made from stainless steel, in particular from austenitic stainless steel, for example stainless steel 316L.

The lance may comprise only one material, it can also be advantageous when different parts of the lance comprise different materials. For example, the immersion end may be made from stainless steel, while the handling end can be made from aluminum. Thus, the lance assembly can be designed cost effective and light weight.

The immersion end of the lance is preferably formed as a hollow body, for example as a tube. The cross-section of the immersion end can have a circular shape, it may also have various other shapes (e.g. square, triangular, polygonal). The tube can have a thickness in the range of 1 to 10 mm, with an internal diameter of between 5 and 35 mm and an external diameter between 10 to 40 mm. The tube can be foreseen with coupling means configured to couple several parts of the lance to each other, for example by threading means.

The lance is configured to engage the sample unit, preferably it is configured to be inserted into the sample unit. Most preferably, the immersion end of the lance is configured to be inserted into the sample unit. In other words, the immersion end of the lance carries the sample unit in use. In particular, the immersion tip is configured to engage the sample unit, in other words, the immersion tip is configured to be inserted into the sample unit. The external diameter and shape of the immersion tip is configured to mate with the sampling unit, especially to fit flush in the sample unit. In such cases, the sample unit is configured to be engaged by the immersion end of the lance, preferably the sample unit comprises an indentation which is configured for the immersion end of the lance to be inserted.

A further aspect of the invention is a method for taking samples from a molten aluminum bath in a primary aluminum producing facility with a sampling system comprising an inventive sample unit and a lance. The lance has an immersion end and a handling end and is configured to engage the sample unit. The method comprises the sequential steps
(a) providing the sampling system;
(b) immersing the sample unit and the immersion end of the lance in the molten aluminum bath;
(c) retracting the sample unit and the immersion end of the lance from the molten aluminum bath when a sample of molten aluminum has filled the sample chamber;
(d) separating the sample from the sample unit.

All features, advantages and embodiments mentioned in relation to the sampling system for the lance and the sample unit according to the invention also apply to the inventive method.

In step (a), the method comprises providing a sampling system. Providing the sampling system is to be understood as providing a lance engaging a sample unit. In other word, the sampling system comprises a sample unit coupled on or to a lance.

In step (b), the method comprises immersing the sample unit and the immersion end of the lance in the molten aluminum bath. After step (b) the sample unit and the immersion end are positioned under the surface of the molten aluminum bath at a sampling position. During the immersion, the sample unit and the immersion end of the lance are moved through the cryolite layer which typically covers the molten aluminum bath.

To minimize the contact time of the immersion unit and the immersion end of the lance with the cryolite layer prior to the intake of the sample, the immersion speed needs to be high enough. Preferably, the immersion speed is at least 20 cm/s, more preferred at least 30 cm/s. For example, suitable immersion speeds are in the range of 20 - 50 cm/s.

During the passage of the sample unit and the immersion end of the lance through the cryolite layer, cryolite will freeze on the introduced cold parts when the materials of the lance and the sample unit are chosen in a suitable way. Thus, a crust of frozen cryolite will build up on the junction between the sample unit and the immersion end of the lance as well as on the outside of the sample unit. Surprisingly it has been found, that this cryolite crust is favorable for the inventive method. It enhances the sealing of the junction as well as the sample unit, which allows the molten aluminum to enter the sample unit only through the inflow opening, in particular through the inflow conduit. Furthermore, the lance is protected from the molten aluminum as well as from ambient oxygen when retracted from the melt, which prolongs its lifetime and enhances its re-usability.

The immersion of the sample unit and the immersion end of the lance may comprise more than one sub-step. For example, the step may comprise
(i) immersing the sample unit and the immersion end to a first position, in which the sample unit is in contact with the bottom of the molten aluminum bath and
(ii) retracting the sample unit and the immersion end to a sampling position between the bottom of the aluminum bath and the surface of the molten aluminum bath.

Such a sub-step procedure may ensure, that the sample unit is positioned at a suitable sampling position when the molten aluminum enters the sample cavity.

As soon as the immersion unit is positioned in the molten aluminum bath, the molten aluminum will flow into the sample cavity through the inflow opening. The molten aluminum which enters the sample cavity will build the sample. If means for covering the inflow opening are present on or at the sample unit, this filling will start after such means have dissolved, burned or otherwise disintegrated.

In step (c), the method comprises retracting the sample unit and the immersion end of the lance from the molten aluminum bath when a sample of molten aluminum has filled the sample cavity.

In step (d), the method comprises separating the sample unit from the sample. Thus, the sample is removed from the sampling system and in particular from the sample unit. The removal is typically conducted after a certain cooling period, during which the sample of molten aluminum solidifies in the sample cavity. It is to be understood, that removing the sample unit includes the destruction of the sample unit parts surrounding the sample.

The method may comprise further steps. For example, the method my comprise a step during which the sample unit is removed from the lance and/or a step during which the remains of the sample unit are disposed in the molten aluminum bath.

Preferably, the sample is delivered to an analysis device after being removed from the sample unit. The sample can be directly analyzed by a suitable spectroscopic technique, for example by OES or LIBS analysis.

The following schematic drawings show aspects of the invention for improving the understanding of the invention in connection with some exemplary illustrations, wherein
- Figure 1: shows a sampling system with a sample unit and a lance in use.
- Figure 2: shows a sample unit according to the invention in different assembly stages.
- Figure 3: shows the immersion end of a lance with an attached sample unit in more detail.
- Figure 4: shows alternative configurations for sample chamber assemblies.

The drawings illustrate embodiments and together with the description serve to explain the principles of the invention. The elements of the drawings are not necessarily to scale relative to each other. Like reference numerals designate corresponding similar parts.

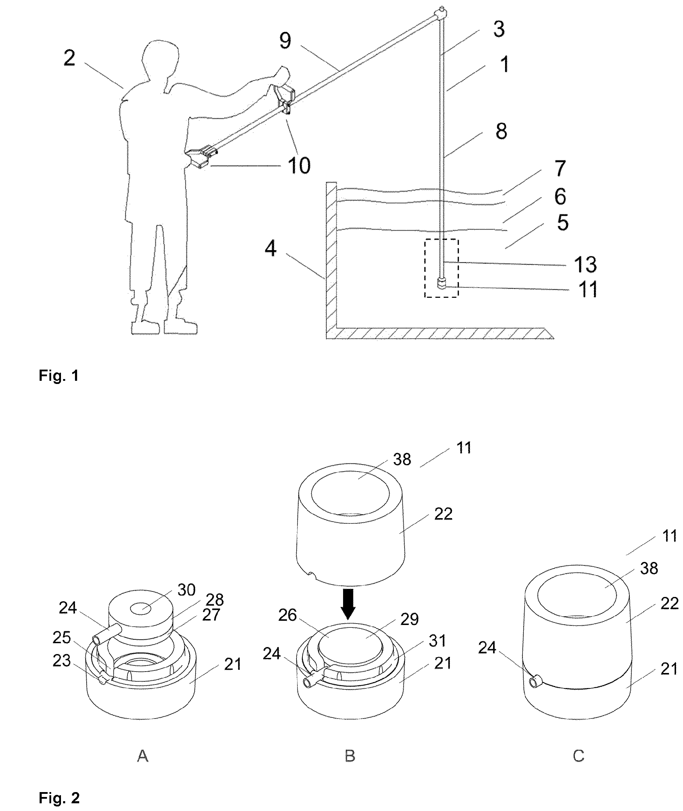

Figure 1 shows a sampling system 1 in use. An operator 2 holds the lance 3 and inserts it manually in a vessel 4 containing a melt of aluminum 5. The aluminum bath 5 is covered with a layer of cryolite 6; a crust 7 covers the cryolite layer 6. The shown lance 3 comprises an immersion portion 8 and a handling portion 9 with handles 10. At the end of the immersion portion 8, i.e. the immersion end 13, a sample unit 11 is arranged.

For the sampling process, the operator 2 introduces the lance 3 into the vessel 4. During this process, the operator 2 has no visual contact to the interior of the vessel. The immersion end 13, holding the sampling unit 11, is immersed through the crust 7 and the cryolite layer 6 in the aluminum bath 5. The cryolite typically has a superheat of only 10 °C, i.e. its temperature exceeds the melting temperature of the material by only 10 °C. Thus, cryolite will freeze on the cold components of the sampling system 1 during the passage through the cryolite layer 6, in particular, it will freeze over the connection between the immersion end 13 and the sample unit 11. This frozen layer protects the lance 3, in particular its immersion end 13, from dissolving in the cryolite and also seals the joint between immersion end 13 and sample unit 11. After the immersion of the sample unit 11, the sample chamber 12 (not visible in Fig. 1) within the sample unit 11 will be filled by molten aluminum. After retraction of the immersion lance 3 and the sample unit 11 from the vessel 4, the sample unit 11 can be easily broken, releasing the sample.

After cooling, the cryolite frozen on the immersion lance becomes fragile and can be removed from the immersion lance, which can be re-used subsequently. The material of the lance, especially the immersion end 13, needs to be chosen to comply with the demands in the vessel and the corrosive nature of the cryolite material. The samples obtained in an inventive sample unit 11 are directly available for an analysis, even at the place of sampling. All waste materials from the sample unit are selected to only comprise non-contaminating materials and can thus be disposed in the vessel with the molten aluminum, without generating waste or undesired additions in the molten metal.

Figure 2 shows a sample unit 11 according to the invention in different assembly stages. For assembling the sample unit 11, the chamber parts (27, 28, 29) are first inserted into an indentation of a first bottom part 21 of the refractory body. Subsequently, the refractory body is closed with a second top part 22. A very simple assembly is thereby possible. In Fig. 2 A the bottom part of the sample unit 11 is shown, comprising the bottom part of the refractory body 21 foreseen with a recess 23 as an intake for the inflow conduit 24, building part of the inflow opening 25. Two parts of a three-part sample chamber assembly 26, a bottom disc-shaped plate 27 and a central ring 28, which already holds the inflow conduit 24, as well as the sample cavity 30 are visible. The inflow conduit 24 is positioned centrally in the ring 28. After covering the sample cavity 30 with a second disc-shaped plate 29, the sample unit 11 is closed with a second sand body 22. The upper sand body 22 comprises an indentation 38, which is configured to be engaged by an immersion lance. To provide adhesion and a seal between the two parts of the refractory body 20, a glueing cement 31 is also provided. Fig. 2 C shows an outer view of the fully assembled sample unit 11, with the inflow conduit 24 partially protruding. Subsequently, the opening of the inflow conduit can be covered, for example with a paper tape (not shown), to prevent cryolite from entering the sample cavity.

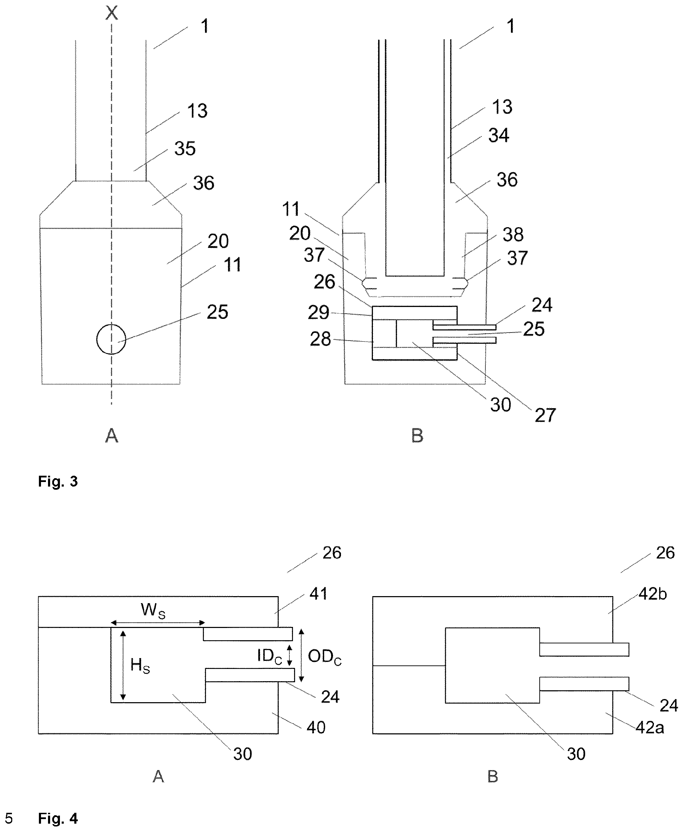

Figure 3 shows the immersion end 13 of the lance 3 and the sample unit 11 (indicated by a dashed box in Fig. 1) in more detail. In Fig. 3 A, a view on the exterior of the immersion end 13 of the lance 3 with a mounted sample unit 11 thereon is shown. The immersion end 13 comprises a part with a smaller diameter 35 and a part with a larger diameter, in this way forming a collar 36. On its outer circumference, the collar 36 sits flush on the sample unit 11. In the view of Fig. 3 A, only the outer face of the refractory body 20 of the sample unit 11 is visible. The sideways arranged inflow opening 25 leads to the sample chamber assembly 26 arranged inside the refractory body 20 (not visible in the view of Fig. 3 A). The refractory material is a porous fireproof material, for instance a silica-based sand.

In Fig. 3 B a schematic cross-section of the detailed view along line X in Fig. 3 A is shown. The sample unit 11 is engaged by the immersion end 13 of the lance. The lance comprises a main tube-shaped body 34 and the immersion end, which is designed with the collar 36 and protrusions 37.

The sample unit 11 has a conically shaped intake 38 on the top side, in which the tip of the immersion end 13 is inserted. When the refractory sand body 20 is pushed on the immersion end tip against the collar 36 so that the refractory body 20 surrounds the exterior of the immersion end tip, the protrusions 37 extending from the immersion end scratch the inner surface of the body - the sample unit 11 is thus held in place by these protrusions 37.

The sample chamber assembly 26 is arranged approximately axial symmetrically in the refractory body 20. It is constructed substantially cylindrically. The sample chamber assembly 26 comprises three parts (27, 28, 29) according to the assembly displayed in Fig. 2, which surround the cylindrical sample cavity 30.

At a side of the sample chamber assembly 26 an opening is foreseen, which is arranged in flow communication with the inflow opening 25 of the surrounding refractory body 20 with an inflow conduit 24.

The sample chamber assembly 26 is located completely outside and apart from the immersion end 13 of the lance, which facilitates the releasing of the sample. It suffices to break the refractory body 20 to free the sample from the sample unit 11. After the release of the sample from the refractory body 20, the plates of the chamber assembly (27, 29) are also removed, and the sample remains in the ring-shaped part of the assembly 28 with the inflow conduit 24 attached. Thus, the sample can be easily manipulated during the following analysis procedure.

Figure 4 shows two alternative configurations for sample chamber assemblies 26, each comprising only two chamber parts. The assembly of Fig. 4 A comprises a cup-shaped bottom part 40 and a disc-shaped plate 41 on the top, which closes the chamber assembly 26. Also shown are the dimensional parameters used to describe the chamber assembly. The volume of the sample cavity 30 is determined by its height (H_{S}) and its width (W_{S}). The inflow conduit 24 is characterized by an outer diameter OD_{C} and an inner diameter ID_{C}. The assembly of Fig. 4 B comprises two half-shells (42a, 42b) that symmetrically enclose the sample cavity 30.

It is to be understood, that all described embodiments can also be present in combination if they do not contradict each other.

### Examples:

The filling behavior and sample quality of different sample chamber configurations and different inlet tubes were evaluated. For all examples, an aluminium sample chamber comprising a central ring with an opening for an inlet tube and two discs with the same outer diameter on the bottom and top of the ring were positioned in a two-part sand body with an inlet tube leading through the sand body into the sample chamber. The chamber parts enclosed a disc-shaped chamber. The barrel-shaped sand body had an outer height of 45 mm and a maximal diameter of 41 mm.

The resulting sample unit was positioned on a lance and a sample of molten aluminium was obtained. Subsequently, the sand body was crushed and the discs enclosing the sample chamber were removed to obtain the final sample, enclosed by the ring of the sample chamber.

The samples were visually inspected for the filing behavior and the quality of the sample surface.

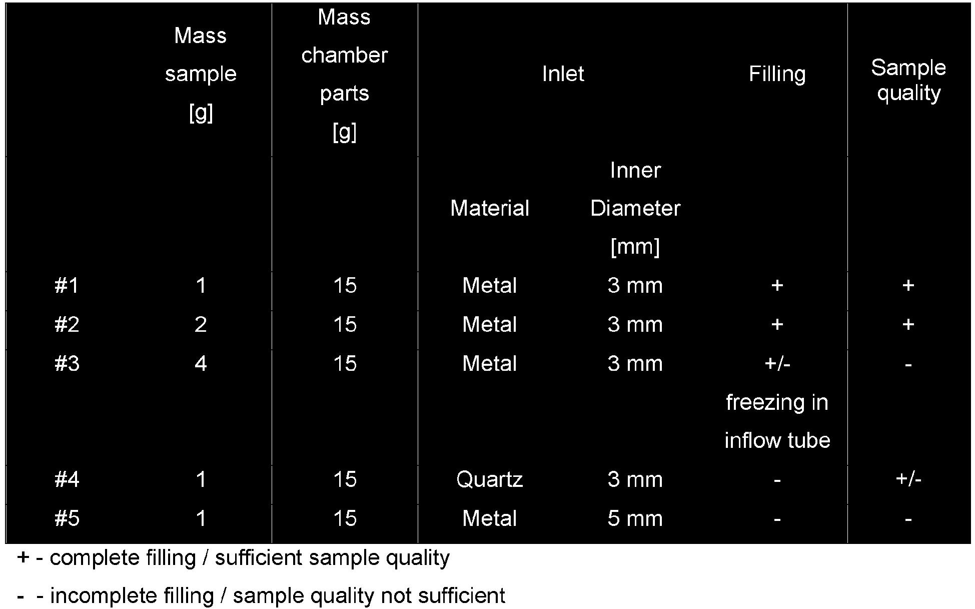

Only with inventive examples #1 and #2, complete samples with a good surface quality could be obtained.

### Reference Signs

- 1: sampling system
- 2: operator
- 3: lance
- 4: vessel
- 5: aluminum bath
- 6: cryolite layer
- 7: crust
- 8: immersion portion of lance
- 9: handling portion of lance
- 10: handles
- 11: sample unit
- 12: sample chamber
- 13: immersion end

- 20: refractory body
- 21: bottom part of refractory body
- 22: top part of refractory body
- 23: recess for inflow conduit
- 24: inflow conduit
- 25: Inflow opening
- 26: sample chamber assembly
- 27: bottom disc of sample chamber assembly
- 28: central part of sample chamber assembly
- 29: top disc of sample chamber assembly
- 30: sample cavity
- 31: glueing cement

- 34: tube body of lance
- 35: part of immersion end with small diameter
- 36: collar
- 37: protrusions
- 38: Conically-shaped lance intake
- 39: opening of sample chamber assembly

- 40: Bottom part of sample chamber assembly
- 41: Disc-shaped plate of sample chamber assembly
- 42: Half shells of sample chamber assembly

## Claims

1. A sample unit for a sampling system for taking samples from a molten aluminum bath in a primary aluminum producing facility,
wherein the sample unit is configured to receive a sample of molten aluminum, and comprises
- a refractory body;
- a sample chamber assembly arranged within the refractory body,
∘ wherein the sample chamber assembly comprises at least two chamber parts which are configured to enclose a sample cavity,
∘ wherein the sample cavity comprises a top side, a bottom side and a lateral side, wherein the lateral side extends between the top side and the bottom side and
∘ wherein the mass of an aluminium sample with the volume of the sample cavity is less than 20 % of the mass of the sample chamber assembly;
- an inflow opening, which is in flow connection with the sample cavity and is positioned in connection to the lateral side of the sample cavity;
- an inflow conduit arranged at least partly in the inflow opening,
∘ wherein the inflow conduit comprises an inlet end and an outlet end,
∘ wherein the outlet end is the end arranged next to the sample cavity and
∘ wherein the inflow conduit is made from a metal.

2. A sample unit according to claim 1, wherein the inflow conduit is made from steel or stainless steel.

3. A sample unit according to claim 1 or 2, wherein the mass of an aluminium sample with the volume of the sample cavity is in the range of 2 - 20 % of the mass of the sample chamber assembly.

4. A sample unit according to any of the preceding claims, wherein the mass of an aluminium sample with the volume of the sample cavity in the range of 0,3 - 5 g

5. A sample unit according to any of the preceding claims, wherein the sample chamber assembly is gas permeable.

6. A sample unit according to any of the preceding claims, wherein the refractory body has a porosity of least 20 %.

7. A sample unit according to any of the preceding claims, wherein the sample cavity is completely enclosed by the chamber parts.

8. A sample unit according to any of the preceding claims, wherein the gas permeability of the sample unit is higher than 3 l/min

9. A sample unit according to any of the preceding claims, wherein the sample cavity is constructed cylindrically, and the top side and the bottom side of the sample cavity have an approximately circular cross section.

10. A sample unit according to any of the preceding claims, wherein the material of the sample chamber assembly is copper or aluminum.

11. A sample unit according to any of the preceding claims, wherein the at least two chamber parts are detachable from each other.

12. A sample unit according to any of the preceding claims, wherein at least one of the chamber parts is configured to be inseparable from a sample.

13. A sample unit for a sampling system for taking samples from a molten aluminum bath in a primary aluminum producing facility,
wherein the sample unit is configured to receive a sample of molten aluminum, and comprises
- a refractory body;
- a sample chamber assembly arranged within the refractory body,
∘ wherein the sample chamber assembly comprises at least two chamber parts which are configured to enclose a sample cavity,
∘ wherein the sample cavity comprises a top side, a bottom side and a lateral side, wherein the lateral side extends between the top side and the bottom side and
∘ wherein the mass of an aluminium sample with the volume of the sample cavity is less than 20 % of the mass of the sample chamber assembly;
- an inflow opening, which is in flow connection with the sample cavity and is positioned in connection to the lateral side of the sample cavity;
- an inflow conduit arranged at least partly in the inflow opening,
∘ wherein the inflow conduit comprises an inlet end and an outlet end,
∘ wherein the outlet end is the end arranged next to the sample cavity and
∘ wherein the ratio of the volume of the sample cavity and the inner cross-sectional area of the inflow conduit are in the range of 25 to 60 mm.

14. A sampling system for taking samples from a molten aluminum bath in a primary aluminum producing facility, comprising
- a sample unit according to any of claims 1 - 12 or claim 13,
- a lance, having an immersion end and a handling end, wherein the lance is configured to engage the sample unit.

15. Method for taking samples from a molten aluminum bath in a primary aluminum producing facility, comprising the sequential steps
(a) providing a sampling system, comprising a sample unit according to any of claims 1 - 12 or claim 13 and a lance,
wherein the lance has an immersion end and a handling end and is configured to engage the sample unit;
(b) immersing the sample unit and the immersion end of the lance in the molten aluminum bath;
(c) retracting the sample unit and the immersion end of the lance from the molten aluminum bath when a sample of molten aluminum has filled the sample cavity;
(d) separating the sample from the sample unit.
